# EUROPEAN PATENT APPLICATION

(11) **EP 1 854 678 A1**
(43) Date of publication of application: **14.11.2007**
(21) Application number: 07009334.9
(22) Date of filing: 09.05.2007
(51) Int. Cl.: B60R 21/015

(54) **On-vehicle input apparatus**

(30) Priority: 12.05.2006 JP 2006134132
(71) Applicant: ALPS ELECTRIC CO., LTD., Tokyo 145-8501 (JP)
(72) Inventor: Shibazaki, Ken, Tokyo 145-8501 (JP); Onodera, Mikio, Tokyo 145-8501 (JP)
(74) Representative: Klunker . Schmitt-Nilson . Hirsch

(57) **Abstract**

An on-vehicle input apparatus capable of determining whether an input operation unit is operated by a driver or a passenger seated on an assistant driver seat, using a simple configuration is provided. Determining means of determining whether the input operation unit installed between a driver seat and an assistant driver seat is operated by a driver or a passenger seated on the assistant driver seat includes a driver-seat pyroelectric sensor provided to sense an object between the driver seat and the input operation unit; an assistant driver-seat pyroelectric sensor provided to sense an object between the assistant driver seat and the input operation unit; a CPU provided to serve as a determining unit of determining that the input operation unit is operated by the driver at the time when the driver-seat pyroelectric sensor senses the object and determining that the input operation unit is operated by the passenger at the time when the assistant driver-seat pyroelectric sensor senses the object; and an external memory device.

## Description

### Background of the Invention

### 1. Field of the Invention

The present invention relates to an on-vehicle input apparatus for determining whether an input operation unit installed between a driver seat and an assistant driver seat is operated by a driver seated on the driver seat or a passenger seated on the assistant driver-seat.

### 2. Description of the related art

The known on-vehicle input apparatus is disclosed in JP-A-2004-67031. The known on-vehicle input apparatus includes an input operation unit installed between a driver seat and an assistant driver seat and determining means for determining whether the input operation unit is operated by the hand of a driver seated on the driver seat or the hand of a passenger seated on the assistant driver seat.

In the known on-vehicle input apparatus, the determining unit includes an infrared ray camera installed so as to take a picture in a predetermined range from the input operation unit including a driver and a passenger and an image processing unit for determining whether hands operating the input operation unit belong to the driver or the passenger by processing the image data of the infrared ray camera.

The above-mentioned known on-vehicle input apparatus has the determining means including the infrared ray camera and the image processing unit. A device such as the infrared ray camera has a plurality of sheets of lenses or an image sensor such as a CCD. Consequently, the configuration is complicated and an image processing program with a complicated algorithm is necessary in the image processing unit. As a result, manufacturing the described known on-vehicle input apparatus needs a high cost.

### Brief Description of the Drawing

Fig. 1 is a block diagram illustrating a system configuration of an on-vehicle input apparatus according to an embodiment of the invention.
Fig. 2 is a schematic diagram illustrating a driver-seat pyroelectronic sensor, an assistant driver-seat pyroelectronic sensor, and a layout in a vehicle of an operation device shown in Fig. 1.
Fig. 3 is a flowchart illustrating a process of a CPU shown in Fig. 1.
Figs. 4A and 4B are exemplary diagrams illustrating a driver-seat picture and an assistant driver-seat picture denoted by a display unit shown in Fig. 1.

### Summary

An advantage of the present invention is to provide a simply configured on-vehicle input apparatus for determining whether an input operation unit installed between a driver seat and an assistant driver seat is operated by a driver seated on the driver seat or a passenger seated on the assistant driver seat.

According to a first aspect of the invention, an on-vehicle input apparatus has an input operation unit installed between a driver seat and an assistant driver seat, and determining means for determining whether the input operation unit is operated by a driver seated on the driver seat or by a passenger seated on the assistant driver seat, characterized in that the determining means includes: a driver-seat optical switch provided to sense an object between the driver seat and the input operation unit; an assistant driver-seat optical switch provided to sense an object between the assistant driver seat and the input operation unit; and a determining unit for determining that the input operation unit is operated by the driver when the driver-seat optical switch senses the object and determining that the input operation unit is operated by the passenger when the assistant driver-seat optical switch senses the object.

In the configuration according to the invention, the driver-seat optical switch and the assistant driver-seat optical switch are provided. These switches have a simpler configuration than an infrared ray camera such as a pyroelectric sensor or a reflective optoelectronic switch. In addition, according to the invention, whether the input operation unit is operated by the driver or the passenger seated on the assistant driver seat depends on which optical switch between the driver-seat optical switch and the assistant driver-seat optical switch senses the object. Consequently, the program algorithm for performing the determination is simpler than an image processing program algorithm. n this manner, in the simple configuration according to the invention, it is possible to determine whether the input operation unit installed between the driver seat and the assistant driver seat is operated by the driver seated on the driver seat or the passenger seated on the assistant driver seat.

According to a second aspect of the invention, in the on-vehicle input apparatus according to the first aspect of the invention, characterized in that the determining unit determines that the input operation unit is operated by the driver when both the driver-seat optical switch and the assistant-seat optical switch sense the object at the almost same time.

In such a configuration according to the invention, when the driver and the passenger operate the input operation unit at the almost same time, the driver may have priority over the passenger as the operator.

According to a third aspect of the invention, in the on-vehicle input apparatus according to the first aspect of the invention, the on-vehicle input apparatus characterized in that a display unit capable of displaying an operation picture; and a display control unit for controlling the display unit to display the operation picture in accordance with the operation performed on the input operation unit, wherein the display control unit is configured so as to control the display unit to display the operation picture with a different background color when the determining unit determines that the input operation unit is operated by the driver and when the determining unit determines that the input operation unit is operated by the passenger.

In the configuration according to the invention, the background color of the operation picture varies in accordance with the determination result of the determining unit. Consequently, it is possible to confirm who is determined as the operator between the driver and the passenger, looking the background color of the operation picture.

As describe above, in the simple configuration according to the invention, it is possible to determine whether an input operation unit installed between a driver seat and an assistant driver seat is operated by a driver seated on the driver seat or a passenger seated on the assistant driver seat. Consequently, it is possible to decrease a manufacturing cost of the input operation unit which has a function of determining whether the input operation unit is operated by the driver seated on the driver seat or the passenger seated on the assistant driver seat.

### Brief Description of the Drawing

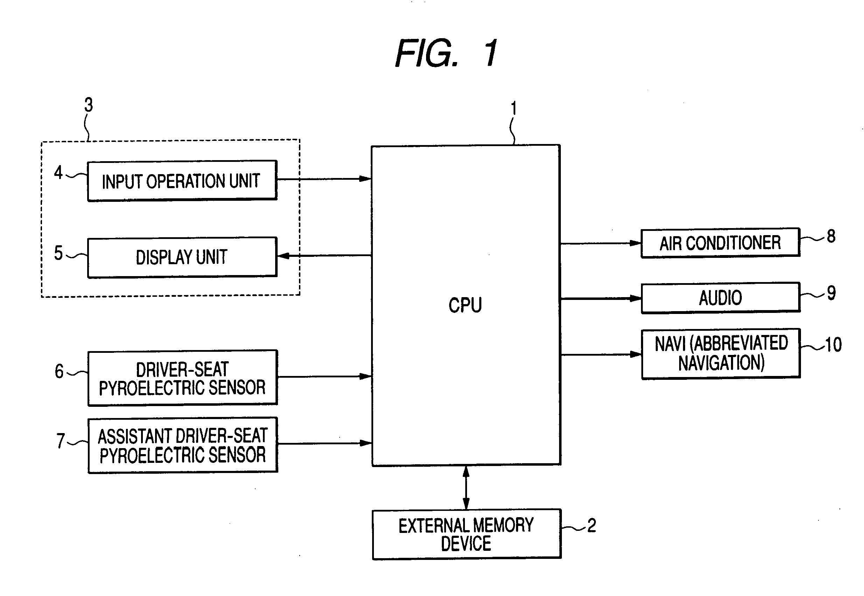

Fig. 1 is a block diagram illustrating a system configuration of an on-vehicle input apparatus according to an embodiment of the invention.

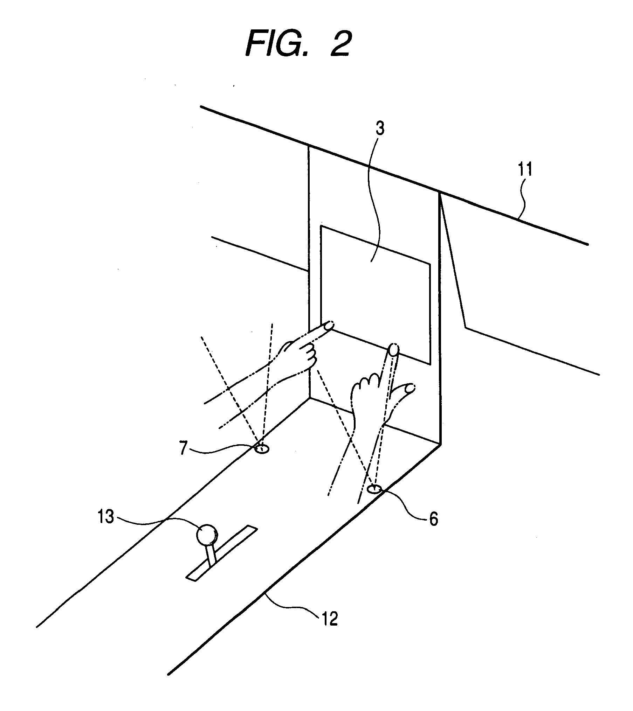

Fig. 2 is a schematic diagram illustrating a driver-seat pyroelectronic sensor, an assistant driver-seat pyroelectronic sensor, and a layout in a vehicle of an operation device shown in Fig. 1.

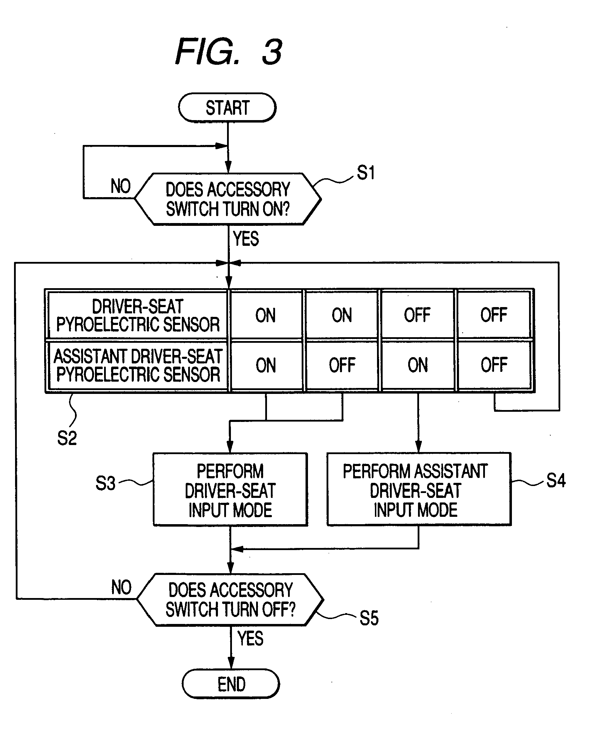

Fig. 3 is a flowchart illustrating a process of a CPU shown in Fig. 1.

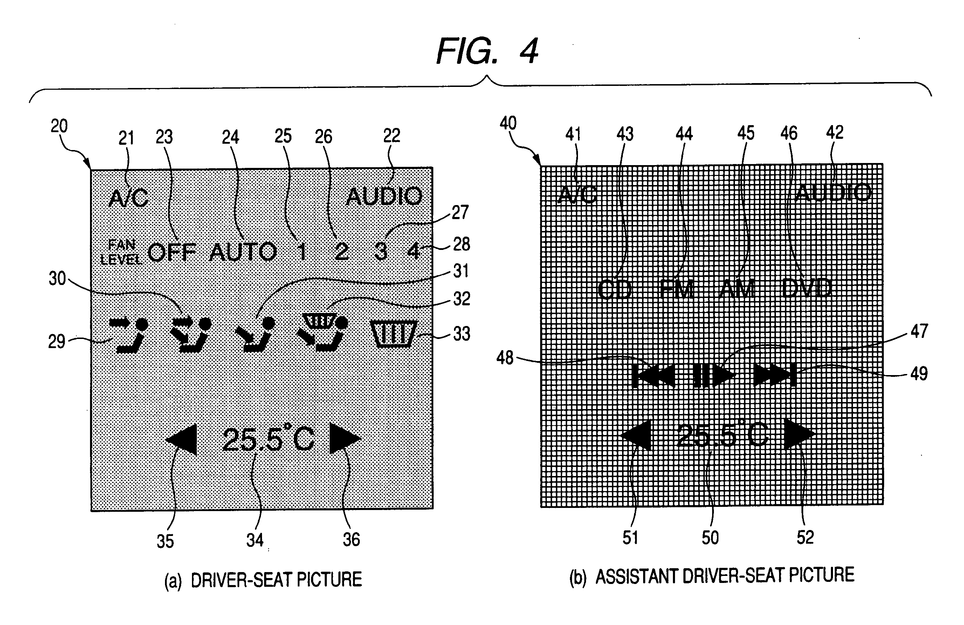

Figs. 4A and 4B are exemplary diagrams illustrating a driver-seat picture and an assistant driver-seat picture denoted by a display unit shown in Fig. 1.

### Description of the preferred Embodiments

An on-vehicle input apparatus according to an embodiment of the invention will be described with reference to attached Figs. 1 to 4.

Fig. 1 is a block diagram illustrating a system configuration according to an embodiment of the invention. Fig. 2 is an exemplary schematic diagram illustrating a driver-seat pyroelectric sensor, an assistant driver-seat pyroelectric sensor, and a layout in a car. Fig. 3 is a flowchart illustrating processes of a CPU shown in Fig. 1. Figs. 4A and 4B are diagrams a driver-seat picture and an assistant driver-seat picture displayed on a display unit shown in Fig. 1.

As shown in Fig. 1, a CPU 1, an external memory device 2, and an operation device 3 for inputting an operation signal into the CPU 1 are provided in the embodiment. The operation device 3 has an input operation unit 4 configured as a touch panel for generating and outputting the operation signal inputted into the CPU 1 and a display unit 5 configured as a liquid crystal display device controlled by the CPU 1.

As shown in Fig. 2, the operation device 3 is installed between a driver seat (not shown) and an assistant driver seat (not shown), for example, on the upper middle of an instrument panel 11, such that an operator can operate the operation device 3 from any side of the driver seat and the assistant driver seat.

Using a program stored in the external memory device 2 in advance, the CPU 1 outputs a command signal for on-vehicle devices such as an air-conditioner 8 (hereinafter, referred to as "an air con 8"), an audio 8, and a navigation system 8 to be operated in accordance with the operation signal coming from the input operation unit 4.

In addition, as shown in Fig. 1, a driver-seat optical switch provided to sense the existence of an object between the driver seat and the input operation unit 4, for example, a driver-seat pyroelectric sensor 6 configured as a pyroelectric sensor for performing ON/OFF output power, and an assistant driver-seat optical switch provided to sense the existence of an object between the assistant driver seat and the input operation unit 4, for example, an assistant driver-seat pyroelectric sensor 7 configured as the pyroelectric sensor for performing ON/OFF output power are provided according to the embodiment.

As shown in Fig. 2, a console 12 is disposed between the driver seat and the assistant driver seat. The driver-seat pyroelectric sensor 6 and the assistant driver-seat pyroelectric sensor 7 are each disposed on each edge of the driver seat and assistant driver seat of the more front portion than a shift lever 13 on the console 12.

In addition, using the program stored in the external memory device 2 in advance, the CPU 1 is configured to serve as a determining unit for determining that the driver seated on the driver seat operates the input operation unit 4 when the driver-seat pyroelectric sensor 6 senses the existence of the object and alternatively, determining that the passenger seated on the assistant driver seat operates the input operation unit 4 when the driver-seat pyroelectric sensor 6 senses the existence of the object. That is, the determining means for determining whether the input operation unit 4 is operated by the driver or the passenger includes the driver-seat pyroelectric sensor 6, the assistant-seat pyroelectric sensor 7, the CPU 1, and the external memory device 2.

Using the program stored in the external memory device 2 in advance, the CPU 1 is configured to serve as a display control unit for controlling the display unit 5 so as to display an operation picture in accordance with the operation performed on the input operation unit 4. As the display control unit, the CPU 1 is configured to control the display unit 5 so as to display a driver-seat picture 20 (operation picture) shown in Fig. 4A when the determination result that the driver operates the input operation unit 4 is obtained. Alternatively, the CPU 1 is configured to control the display unit 5 so as to display an assistant driver-seat picture 40 (operation picture) shown in Fig. 4B when the determination result that the passenger operates the input operation unit 4 is obtained.

On the driver-seat picture 20, an icon 21 for commanding to switch the picture to the air con operation picture (picture shown in Fig. 4A), an icon 22 for commanding to switch the picture to an audio operation picture (not shown), an icon 23 for commanding to stop the air con, an icon 24 for commanding to configure an auto-configuration of air volume, icons 25 to 28 for commanding to configure air volume set points, icons 29 to 33 for commanding to configure an airflow opening, a display area 34 for displaying temperature set points of the driver seat, and icons 35 and 36 for commanding to configure the temperature set points are denoted. In addition, the background color of the driver-seat picture 20 is blue, for example.

On the assistant driver-seat picture 40, an icon 41 for commanding to switch the screen to the air con operation picture (not shown), an icon 42 for commanding to switch the screen to the operation picture (picture shown in Fig. 4B), icons 43 to 46 for commanding to select a media among CD, FM, AM, and DVD, icons 47, 48, and 49 for commanding the play or pause, rewinding, and fast forward, respectively at the time of selecting CD or DVD, a display area 50 for representing temperature set points of the assistant driver seat, icons 51 and 52 for commanding the set the temperature set points are denoted. In addition, the background color of the assistant driver-seat picture 40 is different from that of the driver-seat picture 20, for example, red.

The process sequences executed by the CPU 1 are as follows.

In Fig. 3, when an accessory switch turns on (YES in the sequence S1), the CPU 1 determines that the driver-seat pyroelectric sensor 6 senses the signal and the assistant driver-seat pyroelectric sensor 7 senses the signal (sequence S2).

In determining the input situation in the sequence S2, a driver-seat input mode is executed irrespective of inputting the signal which the assistant driver-seat pyroelectric sensor 7 senses at the time of inputting the signal which the driver-seat pyroelectric sensor 6 (sequence S3) senses.

The CPU 1 which executes the driver-seat input mode displays the driver-seat picture 20 shown in Fig. 4A as described above and controls the display unit 5 to switch a default icon or the picture to the audio operation picture in accordance with the operation signal coming from the input operation unit 4. In addition, the CPU 1 generates and outputs the command signal to command the air con 8 or the audio 9 in accordance with the operation signal coming from the input operation unit 4.

In addition, in determining the input situation in the sequence S2, an assistant driver-seat input mode is executed when the signal sensed by the assistant driver-seat pyroelectric sensor 7 is inputted during the period that signal sensed by the driver-seat pyroelectric sensor 6 is not inputted (sequence S4).

The CPU 1 which executes the assistant driver-seat input mode displays the assistant driver-seat picture 40 shown in Fig. 4A described above, and controls the display unit 5 to switch a default icon or the picture to the audio operation picture in accordance with the operation signal coming from the input operation unit 4. In addition, the CPU 1 generates and outputs the command signal to command the air con 8 or the audio 9 in accordance with the operation signal coming from the input operation unit 4.

The CPU 1 executes the driver-seat input mode or the assistant driver-seat input mode, and then when the accessory switch is not in the OFF state, the process returns to the sequence S2 to reiterate the determining routine (YES in the sequence S6 to sequence S2). When the accessory switch is in the OFF state, the process ends.

The operation according to the embodiment configured above will be described.

When the driver's hand reaches the input operation unit 4, the driver-seat pyroelectric sensor 6 senses the hand, and then outputs a sense signal to the CPU 1. The CPU 1 inputting the sense signal executes the driver-seat input mode and controls the display unit 5. In this manner, the display unit 5 displays the driver-seat picture 20 shown in Fig. 4A.

Next, when the driver operates the input operation unit 4, the input operation unit 4 outputs the operation signal to the CPU 1. Sequentially, the CPU 1 inputs the sense signal to control the display unit 5 in accordance with the operation signal. In this manner, the driver-seat picture 20 varies depending on the driver's operation of the input operation unit 4. As well as controlling the display unit 5, the CPU 1 generates and outputs the command signal for operating the air con 8 or the audio 9 in accordance with the operation signal.

Alternatively, when only the hand of the passenger seated on the assistant driver seat reaches the operation unit 4, the assistant driver-seat pyroelectric sensor 7 senses the hand, and then outputs the sense signal to the CPU 1. The CPU 1 inputting the sense signal executes the assistant driver-seat input mode and controls the display unit 5. In this manner, the display unit 5 displays the assistant driver-seat picture 40 shown in Fig. 4B.

Next, when the passenger operates the input operation unit 4, the operation signal is outputted from the input operation unit 4 to the CPU 1. Sequentially, the CPU 1 inputs the sense signal to control the display unit 5 in accordance with the operation signal. In this manner, the assistant driver-seat picture 40 varies depending on the passenger's operation of the input operation unit 4. As well as controlling the display unit 5, the CPU 1 generates and outputs the command signal for operating the air con 8 or the audio 9 in accordance with the operation signal.

When the hand of the driver and that of the passenger reach the input operation unit 4 at the almost same time, the sense signals coming from both the driver-seat pyroelectric sensor 6 and the assistant driver-seat pyroelectric sensor 7 are inputted into the CPU 1. In this case, the CPU 1 executes only the driver-seat input mode.

According to the embodiment, the following advantage can be achieved.

According to the embodiment, the driver-seat pyroelectric sensor 6 and the assistant driver-seat pyroelectric sensor 7 are provided. The pyroelectric sensors 6 and 7 have a simpler configuration than the infrared ray camera. In addition, according to the embodiment, whether the input operation unit 4 is operated by the driver or the passenger seated on the assistant driver seat depends on which sensor senses the object between the driver-seat pyroelectric sensor 6 and the assistant driver-seat pyroelectric sensor 7. Consequently, the program algorithm to execute the determination is simpler than the image processing program algorithm. In this manner, according to the embodiment, it is possible to determine whether the input operation unit 4 installed between the driver seat and the assistant driver seat is operated by the driver seated on the driver seat or the passenger seated on the assistant driver seat with such a simple configuration. As a result, it is possible to decrease a cost of manufacturing the on-vehicle input apparatus capable of determining whether the input operation unit 4 is operated by the driver or the passenger.

In addition, according to the embodiment, the CPU 1 (determining unit) is configured to determine that the input operation unit 4 is operated by the driver when the driver-seat pyroelectric sensor 6 and the assistant driver-seat pyroelectric sensor 7 sense an object at the almost same time. Consequently, when the driver and the passenger operate the input operation unit 4 at the almost same time, the driver has priority over the passenger as an operator of the input operation unit 4.

According to the embodiment, the background color of the operation picture varies in accordance with the determination result of the CPU 1 (determining unit). Consequently, it is possible to confirm who is determined as the operator between the driver and the passenger, looking the background color of the operation picture.

According to the embodiment, the pyroelectric sensor for performing the ON/OFF output power as the driver-seat optical switch and the assistant driver-seat optical switch is provided. However, the driver-seat optical switch and the assistant driver-seat optical switch according to the embodiment are not limited to the pyroelectric sensor, but reflective optoelectronic switch can be used.

## Claims

1. An on-vehicle input apparatus which has an input operation unit (4) installed between a driver seat and an assistant driver seat, and determining means for determining whether the input operation unit (4) is operated by a driver seated on the driver seat or by a passenger seated on the assistant driver seat, **characterized in that** the determining means includes:
a driver-seat optical switch (6) provided to sense an object between the driver seat and the input operation unit (4);
an assistant driver-seat optical switch (7) provided to sense an object between the assistant driver seat and the input operation unit (4); and
a determining unit (1) for determining that the input operation unit (4) is operated by the driver when the driver-seat optical switch (6) senses the object and determining that the input operation unit (4) is operated by the passenger when the assistant driver-seat optical switch (7) senses the object.

2. The on-vehicle input apparatus according to Claim 1, **characterized in that** the determining unit (1) determines that the input operation unit (4) is operated by the driver when both the driver-seat optical switch (6) and the assistant-seat optical switch (7) sense the object at the almost same time.

3. The on-vehicle input apparatus according to Claims 1 or 2, **characterized in that**
a display unit (3) capable of displaying an operation picture; and
a display control unit (1) for controlling the display unit (3) to display the operation picture in accordance with the operation performed on the input operation unit (4),
wherein the display control unit (1) is configured so as to control the display unit (3) to display the operation picture with a different background color when the determining unit (1) determines that the input operation unit (4) is operated by the driver and when the determining unit (1) determines that the input operation unit (4) is operated by the passenger.
